# EUROPEAN PATENT SPECIFICATION

(11) **EP 0 921 975 B1**
(45) Date of publication and mention of the grant of the patent: **17.04.2002**
(21) Application number: 97936917.0
(22) Date of filing: 28.08.1997
(51) Int. Cl.: B62D 21/12, B62D 21/18, B62D 31/02

(54) **DEVICE FOR REMOVABLE FASTENING OF A DRIVING COMPARTMENT MODULE IN A VEHICLE**
VORRICHTUNG EINER LÖSBAREN VERBINDUNG ZWISCHEN EINER FAHRERKABINE UND FAHRZEUGRAHMEN
DISPOSITIF PERMETTANT DE FIXER DE FA ON AMOVIBLE UN MODULE DU COMPARTIMENT DE COMMANDE D'UN VEHICULE

(30) Priority: 30.08.1996 SE 9603178
(43) Date of publication of application: 16.06.1999
(73) Proprietor: Scania CV Aktiebolag (publ), 151 87 Södertälje (SE)
(72) Inventor: BOREHALL, Hans, S-641 47 Katrineholm (SE)
(74) Representative: Waldebäck, Hans Olov
(86) International application number: SE9701431
(87) International publication number: WO9808727

(56) References cited:
- WO-A-95/14603

## Description

The invention relates to a device for removable fastening of a driving compartment module to a vehicle chassis in accordance with the preamble to patent claim 1.

### State of the art

Bus manufacture usually involves as a first stage the manufacture of a chassis and as a second stage the mounting of a vehicle body on that chassis. It is also usual for the chassis and the vehicle body to be made by different manufacturers. The chassis manufacturer makes a number of different but more or less standardised chassis and the body builder uses the most suitable chassis on which to mount the particular vehicle body type. Although this manufacturing process has long been developed, mounting a vehicle body on a chassis involves various special operations. Various body builders have adopted different positions at which to fasten a driving compartment module to the vehicle's chassis. This has created a need to manufacture a large number of different chassis versions mutually distinguished by the adoption of different positions at which to fasten the driving compartment to otherwise similar chassis. This individual adaptation to the specifications of different body builders makes it impossible to manufacture a standardised chassis and results in chassis manufacturers having to adapt each chassis to the body builder's particular requirements. This makes chassis manufacture unnecessarily expensive and means that the various components required cannot be produced in long production runs. A device for fastening of a driving compartment modul in a vehicle is shown in WO-A-95/4603.

### Objects of the invention

The main object of the invention is to eliminate the abovementioned disadvantages. Its purpose is therefore to make it possible to manufacture the chassis as a standardised unit which nevertheless allows a driving compartment module to be fastened at different positions according to individual body builders' requirements. The invention also aims at making possible a high degree of simplified manufacture of chassis to create the possibility of mass-producing the constituent parts. Where individual adaptation of a chassis is required, this has to be possible by using the same parts as for other chassis and by individual adaptation at a late stage in the manufacturing process. For example, the same components have to be usable irrespective of whether the vehicle is for righthand or lefthand drive.

A further aim is to make chassis manufacture possible at a low cost.

### Brief description of the invention

In order to achieve the abovementioned objects, the invention is distinguished by the features indicated in the characterising part of patent claim 1. The independent subsidiary claims indicate various advantageous embodiments.

Providing cross-members with at least one mounting incorporating fastening surfaces with a number of alternative fastening holes makes it possible for the driving compartment module fastening member to be fitted at various alternative positions in the transverse direction of the vehicle. Symmetrical configurations of holes in the cross-members and the fastening surfaces make it possible to fit the same cross-member with fastening surfaces on the left or on the right, which means that identically similar cross-members can be used for making chassis for lefthand and righthand drive vehicles.

Other features distinguishing the invention are indicated in the description below of an embodiment with reference to the attached drawings.

### List of drawings

Fig. 1 shows a perspective view obliquely from the rear right of the rear section of a vehicle chassis, and
Fig. 2 shows a perspective view obliquely from the rear left of the chassis.

### Description of an embodiment

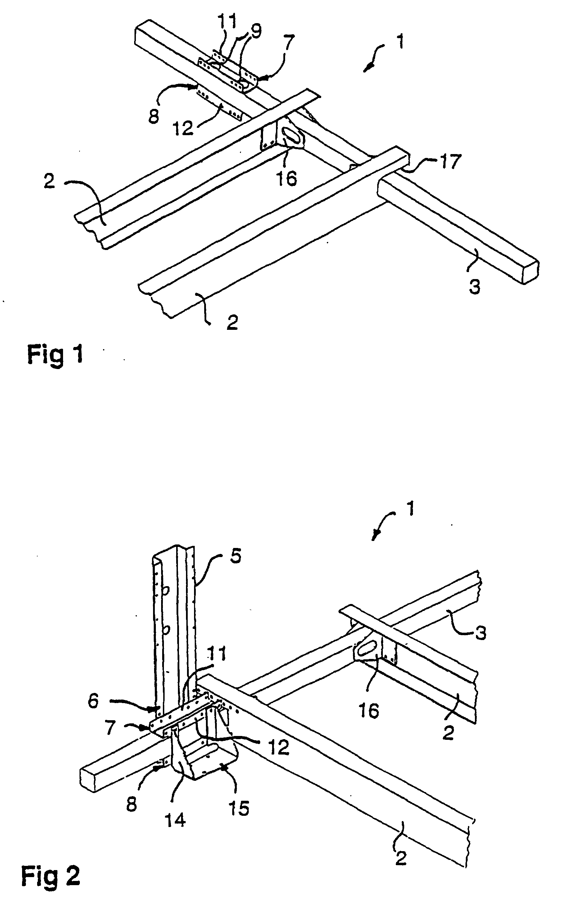

The attached drawings show perspective views of a rear section of a chassis 1 for a vehicle which in this embodiment takes the form of a bus. The drawings are schematic, which explains why the two depictions do not fully correspond to one another. The chassis in Fig. 2 is also depicted with more components fitted than in Fig. 1.

The chassis 1 incorporates a frame with frame side members 2 and a number of cross-members which include a front cross-member 3 which, inter alia, is intended for fastening of a driving compartment module. This driving compartment module incorporates at least some of the vehicle controls required for the driver, such as steering stand with steering wheel, instrument panel and possibly also the pedals, although it may also incorporate further or other units. The driving compartment module is thus constructed as a pre-assembled unit, which is why it is called a module. It is constructed around a body which incorporates a vertical fastening member 5 of flanged channel cross-section, by which the driving compartment module is intended to be assembled to the front cross-member 3 of the chassis 1. To make it possible to fasten the driving compartment module at various alterative heights relative to the cross-member 3, the fastening member 5 is provided in the vertical direction with a number of alternative fastening holes 6, only a few of which are used for any one chassis. In this embodiment with the fastening member 5 of flanged channel cross-section, the fastening holes 6 are arranged in two vertical rows in the respective flanges of the member 5.

The front cross-member 3 takes the form of a rectangular-section beam. On its left side as viewed relative to the direction of forward movement of the vehicle, the cross-member 3 has on its upper and lower surfaces respective upper and lower mountings 7 and 8, which are made of mutually identical and symmetrical channel sections. The respective webs of these mountings 7,8 are provided with two circular recesses 9 in which welded connections are arranged and by which the mountings 7,8 are fastened to the respective upper and lower surfaces of the cross-member 3. The two mountings 7,8 thus extend along the cross-member 3 in the transverse direction of the vehicle. Their width is substantially the same as or somewhat greater than the width of the cross-member 3.

The two mountings 7,8 each have a forward flange 11 and a rear flange 12. The flanges of the fastening member 5 of the driving compartment module abut against the forward flanges 11 of the two mountings 7,8 and can be assembled firmly to them by bolted connections. The forward flanges 11 extend in a vertical plane at or immediately in front of the forward side of the cross-member 3, and the rear flanges 12 extend in a vertical plane at or immediately to the rear of the rear side of the cross-member 3. This makes it possible for the fastening member 5 to be fitted in contact with both the upper and lower mountings 7,8 without being in direct contact with the forward side of the cross-member 3. The flanges 11,12 are provided with a number of alternative fastening holes so that the fastening member 5 can also be fitted at various alternative positions in the transverse direction of the vehicle. In this embodiment the respective flanges 11,12 each have six fastening holes arranged in two groups of three holes each. These holes are arranged in the transverse direction at a mutual spacing (or multiple thereof) which corresponds to the distance between the two vertical rows of holes 6 in the fastening member 5. This makes it possible for two of the holes in the upper mounting 7 and two of those in the lower mounting 8 to be in line with four fastening holes 6 in the fastening member 5. Bolted connections by which the fastening member 5 is removably fastened to the cross-member 3 are arranged in these four holes. This also means that the holes in the upper mounting 7 and those in the lower mounting 8 have in the vertical direction the same spacing (or a multiple or multiples thereof) as the holes in the fastening member 5, in order to make fastening possible at different heights.

A bracket 14 intended for fastening a bevel gear to the chassis 1 is fastened by bolted connections to the rear flanges 12 of the two mountings 7,8. This bevel gear forms part of the vehicle's steering system and in a conventional manner connects a steering gear for the vehicle's front wheels to a trasmission shaft connected to the vehicle's steering wheel. (In previous known solutions a corresponding bracket for the bevel gear was welded to the front cross-member at a predetermined position). The bevel gear can be assembled permanently to the bracket 14 by welded connections, and Fig. 2 shows how the bottom of the bracket 14 is provided with purpose-made fastening holes 15.

Like the fastening member 5, the bevel gear bracket 14 may be situated at various positions in the transverse direction of the vehicle. It is advantageous for the bracket 14 to be fastened in the transverse direction at a position opposite the fastening member 5, thereby making it possible for a steering wheel stem connected to the bevel gear to be always fitted in the same position relative to a steering stand mounted on the fastening member 5. The holes 6 used for fastening the fastening member 5 are thus also in line with the holes used for fastening the bracket 14. This makes it theoretically possible to use the same bolted connections for both the fastening member 5 and the bracket 14, but for practical reasons it is usually more advantageous to use separate bolted connections for the fastening member 5 and the bracket 14.

The upper and lower mountings 7,8 depicted are thus used for removable fastening of both the bracket 14 and the fastening member 5 to the front cross-member 3, but the configuration of holes in the bevel gear bracket 14 is designed so that it can only be fitted at one height, since there is no need for fitting at alternative heights.

The mountings 7,8 described and their design constitute one advantageous embodiment. In alternative embodiments of the invention there may be other elements which are provided with corresponding fastening surfaces and which correspond to the flanges 11,12 of the mountings described. In such cases there is no need for two mountings, since one mounting provided with the appropriate fastening surfaces will be sufficient.

The front cross-member 3 with the mountings 7,8 welded on it forms a symmetrical unit. In the embodiment described the upper mounting 7 and the lower mounting 8 are symmetrical to a horizontal plane of symmetry extending through the centreline of the cross-member 3. In addition, the forward flanges 11 and the rear flanges 12 are symmetrical to a vertical plane of symmetry extending through the centreline of the cross-member 3. This makes it possible to use an identical cross-member 3 irrespective of whether the vehicle is for righthand or lefthand drive. For this to be possible there is no need for the abovementioned symmetry conditions to be fulfilled, since it is sufficient for the holes in the upper fastening surface and those in the lower fastening surface to be symmetrical to a horizontal plane of symmetry. The holes arranged in the fastening surfaces thus exhibit a configuration which makes symmetrically identical fitting of the cross-member possible on the right or left side of the chassis.

The above description refers to a lefthand drive vehicle in which the cross-member 3 is arranged with the mountings 7,8 on the left side of the chassis, but fitting the cross-member 3 with the mountings 7,8 on the right side instead makes it possible to use it in a righthand drive vehicle. In such cases the bracket 14 for the bevel gear has of course to be fitted with the correct side upwards, but as this bracket can be fitted after the side on which the bevel gear is to be fitted has been determined, an identical bracket 14 can still be used.

In the embodiment depicted, the frame of the vehicle consists of a cross-member 3 fastened to the frame side members 2 by bolted connections. To this end, the cross-member 3 has welded on it brackets 16 with suitable numbers of fastening holes for the bolted connections. During manufacture of the frame the cross-member 3 with the mountings 7,8 welded on it is inserted in recesses 17 in the webs of the frame members 2, to which it is then fastened by bolted connections. By making these recesses 17 in the frame side members 2 open forwards, this fitting of the cross-member 3 can be carried out from above, an operation which is not hindered by the welded-on upper and lower mountings 7,8.

## Claims

1. Device in a vehicle for removable fastening a driving compartment module to a frame forming part of the vehicle's chassis, whereby
- the frame incorporates a cross-member (3) extending in the transverse direction of the vehicle,
- the driving compartment module incorporates a removable fastening member (5) intended to be fitted to the cross-member (3), and
- the fastening member (5) is provided accordingly with a number of fastening holes (6) for fastening connections, preferably bolted connections, arranged in a particular configuration,
**characterized in that,**
- on the cross-member (3) are arranged an upper and a lower mounting (7 and 8),
- whereby the upper mounting (7) is fastened to an upper side of the cross-member, has an extent in a vertical plane on one side of the cross-member, and incorporates an upper fastening surface (11) situated above said upper side of the cross-member,
- whereby the lower mounting (8) is fastened to a lower side of the cross-member, has an extent in a vertical plane on said one side of the cross-member, and incorporates a lower fastening surface (12) situated below said lower side of the cross-member,
- said upper and said lower fastening surfaces (11,12) are provided with a number of alternative fastening holes in the transverse direction of the vehicle, which fastening holes are arranged at mutual spacings corresponding to the configuration of the holes in said fastening member (5), and
- said fastening holes in said upper and said lower fastening surfaces (11,12) are symmetrical to a horizontal plane of symmetry extending through the centerline of said cross-member (3).

2. Device according to patent claim 1, **characterised in that** the upper and lower fastening surfaces (11) take the form of flanges on two mountings (7,8).

3. Device according to patent claim 2, **characterised in that** the mountings (7,8) have forward flanges (11) which extend in a vertical plane of the cross-member (3).

4. Device according to patent claim 2, **characterised in that** the mountings (7,8) have rear flanges (12) which extend in a vertical plane of the cross-member (3).

5. Device according to patent claim 2, **characterised in that** the upper mounting (7) and the lower mounting (8) take the form of channel sections welded firmly to the cross-member (3) and that flanges of the channel sections form fastening surfaces (11,12) of the mountings.

6. Device according to patent claim 5, **characterised in that** the upper mounting (7) and the lower mounting (8) are symmetrically alike relative to a horizontal plane of symmetry.

7. Device according to any one of patent claims 4-6, **characterised in that** the rear flanges (12) constitute mountings for a bracket (15) intended for a bevel gear forming part of the vehicle's steering system, and that the bracket (15) is removably connected to the rear flanges (12) by bolted connections.

8. Device according to any one of patent claims 4-7, **characterised in that** the configuration of holes in the fastening surfaces (11,12) is designed, relative to the configuration of holes in the bracket (15) and to that in the fastening member (5), so that both the bracket (15) and the fastening member (5) can be fitted to the fastening surfaces (11,12) at various alternative positions in the transverse direction of the vehicle.

9. Device according to any one of patent claims 2-8, **characterised in that** the cross-member (3) and the mountings (7,8) fastened to it form a symmetrical unit which can be fitted to the frame with the mountings (7,8) on either the left or the right side of the vehicle depending on whether the latter is for lefthand or righthand drive.

## Patentansprüche

1. Vorrichtung an einem Fahrzeug zum lösbaren Befestigen eines Fahrerkabinenmoduls an einem zum Fahrgestell des Fahrzeugs gehörigen Rahmen, wobei
- der Rahmen ein Querteil (3) aufweist, das sich in Querrichtung des Fahrzeugs erstreckt,
- das Fahrerkabinenmodul ein lösbares Befestigungsteil (5) aufweist, das zum Anbringen am Querteil (3) bestimmt ist, und
- das Befestigungsteil (5) dementsprechend mit einer Anzahl Befestigungslöcher (6) versehen ist, für Befestigungsverbindungen, vorzugsweise Schraubverbindungen, die in einer besonderen Konfiguration angeordnet sind,
**dadurch gekennzeichnet, dass**
- am Querteil (3) ein obere und eine untere Halterung (7 und 8) angeordnet sind,
- wobei die obere Halterung (7) an einer Oberseite des Querteils befestigt ist, eine Erstreckung in einer senkrechten Ebene auf einer Seite des Querteils hat und eine obere Befestigungsfläche (11) aufweist, die oberhalb der Oberseite des Querteils angeordnet ist,
- wobei die untere Halterung (8) an einer Unterseite des Querteils befestigt ist, eine Erstreckung in einer senkrechten Ebene auf der genannten einen Seite des Querteils hat und eine untere Befestigungsfläche (12) aufweist, die unterhalb der Unterseite des Querteils angeordnet ist,
- die obere und die untere Befestigungsfläche (11, 12) mit einer Anzahl alternativer Befestigungslöcher in Querrichtung des Fahrzeugs versehen sind, welche Befestigungslöcher in gegenseitigen Abständen angeordnet sind, die der Konfiguration der Löcher im Befestigungsteil (5) entsprechen, und
- die Befestigungslöcher in der oberen und der unteren Befestigungsfläche (11, 12) symmetrisch zu einer waagerechten Symmetrieebene sind, die sich durch die Mittellinie des Querteils (3) erstreckt.

2. Vorrichtung nach Patentanspruch 1, **dadurch gekennzeichnet, dass** die obere und die untere Befestigungsfläche (11) von Flanschen an den beiden Halterungen (7, 8) gebildet sind.

3. Vorrichtung nach Patentanspruch 2, **dadurch gekennzeichnet, dass** die Halterungen (7, 8) vorwärtsgerichtete Flansche aufweisen, die sich in einer senkrechten Ebene des Querteils (3) erstrecken.

4. Vorrichtung nach Patentanspruch 2, **dadurch gekennzeichnet, dass** die Halterungen (7, 8) rückwärtige Flansche (12) haben, die sich in einer senkrechten Ebene des Querteils (3) erstrecken.

5. Vorrichtung nach Patentanspruch 2, **dadurch gekennzeichnet, dass** die obere Halterung (7) und die untere Halterung (8) von Kanalabschnitten gebildet sind, die an das Querteil (3) fest angeschweißt sind, und dass Flansche der Kanalabschnitte die Befestigungsflächen (11, 12) der Halterungen bilden.

6. Vorrichtung nach Patentanspruch 5, **dadurch gekennzeichnet, dass** die obere Halterung (7) und die untere Halterung (8) einander in bezug auf eine waagerechte Symmetrieebene symmetrisch gleich sind.

7. Vorrichtung nach einem der Patentansprüche 4-6, **dadurch gekennzeichnet, dass** die hinteren Flansche (12) Halterungen für eine Konsole (15) bilden, die für ein Kegelrad bestimmt ist, welches zur Lenkanordnung des Fahrzeugs gehört, und dass die Konsole (15) mit den rückwärtigen Flanschen (12) durch Schraubverbindungen verbunden ist.

8. Vorrichtung nach einem der Patentansprüche 4-7, **dadurch gekennzeichnet, dass** die Konfiguration der Löcher in den Befestigungsflächen (11, 12) in bezug auf die Konfiguration von Löchern in der Konsole (15) und im Befestigungsteil (5) so gestaltet ist, dass sowohl die Konsole (15) wie das Befestigungsteil (5) an den Befestigungsflächen (11, 12) in mehreren wählbaren Stellungen in der Querrichtung des Fahrzeugs angebracht werden kann.

9. Vorrichtung nach einem der Patentansprüche 2-8, **dadurch gekennzeichnet, dass** das Querteil (3) und die an ihm befestigten Halterungen (7, 8) eine symmetrische Einheit bilden, die am Rahmen angebracht werden kann, wobei die Halterungen (7, 8) entweder an der linken oder der rechten Seite des Fahrzeugs angeordnet sind, je nach dem letzteres für Links- oder Rechtssteuerung vorgesehen ist.

## Revendications

1. Dispositif permettant, dans un véhicule, de fixer, de façon démontable, un module de compartiment de conduite à un cadre faisant partie du châssis du véhicule,
- le cadre comportant une traverse (3) qui s'étend dans la direction transversale du véhicule,
- le module de compartiment de conduite comportant un élément de fixation démontable (5) destiné à être assujetti à la traverse (3), et
- l'élément de fixation (5) étant pourvu, en conséquence, de plusieurs trous de fixation (6) pour des assemblages de fixation, de préférence des assemblages par boulons, positionnés suivant une configuration particulière,
**caractérisé en ce que**
- une pièce de montage supérieure et une pièce de montage inférieure (7 et 8) sont disposées sur la traverse (3),
- la pièce de montage supérieure (7) étant fixée à une face supérieure de la traverse, présentant une partie qui s'étend dans un plan vertical, sur un premier côté de la traverse, et comportant une surface de fixation supérieure (11) située au-dessus de ladite face supérieure de la traverse,
- la pièce de montage inférieure (8) étant fixée à une face inférieure de la traverse, présentant une partie qui s'étend dans un plan vertical, sur ledit premier côté de la traverse, et comportant une surface de fixation inférieure (12) située au-dessous de ladite face inférieure de la traverse,
- lesdites surfaces de fixation supérieure et inférieure (11, 12) sont pourvues de plusieurs trous de fixation alternative dans la direction transversale du véhicule, lesquels trous de fixation sont positionnés suivant des écartements mutuels correspondant à la configuration des trous dans ledit élément de fixation (5), et
- lesdits trous de fixation ménagés dans lesdites surfaces de fixation supérieure et inférieure (11, 12) sont symétriques par rapport à un plan horizontal de symétrie passant par l'axe central de ladite traverse (3).

2. Dispositif selon la revendication 1, **caractérisé en ce que** les surfaces de fixation supérieure et inférieure (11) prennent la forme de rebords sur les deux pièces de montage (7, 8).

3. Dispositif selon la revendication 2, **caractérisé en ce que** les pièces de montage (7, 8) ont des rebords avant (11) qui s'étendent dans un plan vertical de la traverse (3).

4. Dispositif selon la revendication 2, **caractérisé en ce que** les pièces de montage (7, 8) ont des rebords arrière (12) qui s'étendent dans un plan vertical de la traverse (3).

5. Dispositif selon la revendication 2, **caractérisé en ce que** la pièce de montage supérieure (7) et la pièce de montage inférieure (8) prennent la forme de profilés en U, fermement soudés à la traverse (3), et **en ce que** les rebords des profilés en U forment les surfaces de fixation (11, 12) des pièces de montage.

6. Dispositif selon la revendication 5, **caractérisé en ce que** la pièce de montage supérieure (7) et la pièce de montage inférieure (8) sont semblables symétriquement par rapport à un plan horizontal de symétrie.

7. Dispositif selon l'une quelconque des revendications 4 à 6, **caractérisé en ce que** les rebords arrière (12) constituent des montures pour un support (15) prévu pour un pignon conique faisant partie du système de direction du véhicule, et **en ce que** le support (15) est assemblé, de façon démontable, aux rebords arrière (12) au moyen d'assemblages par boulons.

8. Dispositif selon l'une quelconque des revendications 4 à 7, **caractérisé en ce que** la configuration de trous dans les surfaces de fixation (11, 12) est établie, par rapport à la configuration de trous dans le support (15) et à celle réalisée dans l'élément de fixation (5), de telle façon que le support (15) et l'élément de fixation (5) puissent, tous deux, être assujettis aux surfaces de fixation (11, 12) en divers emplacements variables dans la direction transversale du véhicule.

9. Dispositif selon l'une quelconque des revendications 2 à 8, **caractérisé en ce que** la traverse (3) et les pièces de montage (7, 8), fixées à cette dernière, forment un ensemble symétrique qui peut être assujetti au cadre avec les pièces de montage (7, 8) placées soit sur le côté gauche, soit sur le côté droit, du véhicule, suivant que ce dernier est prévu pour une conduite à gauche ou une conduite à droite.
